# EUROPÄISCHE PATENTSCHRIFT

(11) **EP 0 508 085 B1**
(45) Veröffentlichungstag und Bekanntmachung des Hinweises auf die Patenterteilung: **24.07.1996**
(21) Anmeldenummer: 92103376.7
(22) Anmeldetag: 27.02.1992
(51) Int. Cl.: F16L 55/033

(54) **Installationsrohr oder Fallrohr mit Rohrschelle**
Installation pipe or downpipe with pipe clamp
Tuyau d'installation ou de descente avec collier pour tuyau

(30) Priorität: 12.03.1991 DE 4107885
(43) Veröffentlichungstag der Anmeldung: 14.10.1992
(73) Patentinhaber: E. Missel GmbH & Co., D-70374 Stuttgart (DE)
(72) Erfinder: Schäfer, Wolfgang, W-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- CH-A- 664 430
- FR-A- 460 287
- US-A- 3 606 218
- US-A- 4 046 169

## Beschreibung

Die Erfindung betrifft eine Anordnung mit Rohrschelle und Installationsrohr bzw. Fallrohr.

Bei derartigen Anordnungen, die zur Halterung von Rohren insbesondere in Gebäuden oder dgl. dienen, sind zwischen dem Trägerring der Rohrschelle und dem davon umschlossenen Rohr als Schalldämmaterial normalerweise Gummirringe, Filzauflagen oder dgl. vorgesehen, um die Übertragung von Schwingungen, insbesondere von Schall, vom Rohr auf die Schelle older umgekehrt zu verhindern oder zumindest zu dämpfen.

Als Schalldämmittel dienende Filzauflagen haben dabei den Nachteil, daß sie mit der Zeit ermüden und unelastisch werden, so daß sie die Übertragung von Schwingungen oder Schall nicht mehr einwandfrei dämpfen können.

Aus der Druckschrift CH-A-664 430 ist eine Rohrschelle mit zwei Halbringen bekannt, die über abstehende Flansche miteinander verbunden sind. Die Halbringe sind von einem umlaufenden, im Querschnitt U-förmigen Band unterlegt, das seinerseits in eine U-förmige aus zwei Hälften bestehende Schale eingelegt ist, wobei die Schale ihrerseits im montierten Zustand an der Mantelfläche des Rohres anliegt. Das zwischen Halbring und Schale liegende Band weist halbkugelförmige Erhöhungen auf, um die Berührungsflächen zwischen Halbring und Schale zu verringern und eine hohe Schalldämmung zu gewährleisten.

Aus der US-PS 3 606 218 ist eine Rohrschelle mit einem aus zwei Halbringen bestehenden Trägerring bekannt, der das Rohr umschließt. Der Trägerring und die an einem Halbring angeordnete Tragstange sind mit einem elastomeren Material überzogen. An der zum Rohr weisenden Umfangsfläche sind streifenförmige, axial zum Rohr verlaufende Dämmittel zueinander beabstandet angeordnet. Diese Dämmittel sind ebenfalls von dem elastomeren Material eingeschlossen.

Bei den Rohrschellen gemäß der CH-A-664 430 und der US-PS 3 606 218 handelt es sich um Schellenkonstruktionen, die gegen das jeweils zu fixierende Rohr verspannt sind. Diese Verspannung muß derart ausgeprägt sein, daß die Reibung zwischen Schelle und Rohr groß genug ist, um alle auftretenden Kräfte aufnehmen zu können. Als Folge dieser Verspannung und auch als Folge davon, daß das jeweilige Rohr nicht immer zentrisch in der im Regelfall an einer Wand befestigten Schelle sitzt, wird das zwischen Schelle und Rohr gelegene Dämmaterial unterschiedlich komprimiert, was sich hinsichtlich der angestrebten Dämmung der Körperschallübertragung ungünstig auswirkt.

Aus der US-PS 4 046 169 ist eine Halterung für ein dünnwandiges, in Kernenergiesystemen verwendetes Rohr bekannt, wobei in das jeweilige Rohr ein Abschnitt eingesetzt ist, der außenseitig kegelstumpfförmig erweitert ist. Diese kegelstumpfförmige Erweiterung ist zur Vermeidung eines unerwüschten Wärmeübergangs von einem Isoliermaterial formschlüssig umschlossen, der den Rohreinsatz zwecks Vermeidung einer direkten Wärmeübertragung mit geringem Spiel umschließt.

Der Erfindung liegt die Aufgabe zugrunde, eine neue Rohrschelle der eingangs genannten Art bereitzustellen, insbesondere soll stets eine gute Schwingungs- bzw. Schalldämmung zwischen der Rohrschelle und dem von dieser gehaltenen Rohr erreicht werden.

Nach der Erfindung wird diese Aufgabe durch die Merkmale des Patentanspruchs gelöst.

Wesentlich für die Erfindung ist, daß der das jeweilige Rohr umschließende Trägerring nicht mehr direkt oder indirekt gegen das zu halternde Rohr verspannt ist, sondern vielmehr das Rohr mit einem ausgeprägtem Spiel umschließt und unter Zwischenschaltung des Schalldämmittels stirnseitig die über einen am Rohr vorgesehenen Stützflansch eingeleiteten Kräfte aufnimmt. Durch dieses Zusammenwirken von Stützflansch, Schalldämmittel und dem im Regelfall an der Wand befestigten Trägerring wird ein überraschend vorteilhaftes Dämmverhalten der Rohrschelle erzielt.

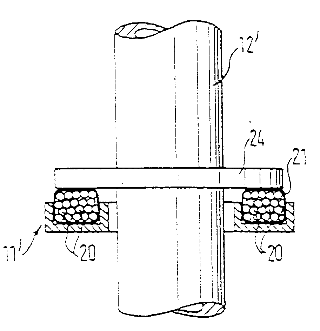

Die einzige Figur der Zeichnung zeigt ein Beispiel einer erfindungsgemäßen Abstützung eines Fallrohres nach der Erfindung in schematischer Darstellung.

In der Zeichnung ist eine als Fallrohrstütze dienende Rohrschelle gezeigt, deren Träger 11' als in Axialrichtung offenes U-Profil ausgebildet ist. In diesem U-Profil sind in einem Gitterschlauch 21 gehaltene Gummikugeln 20 eingesetzt, wobei ein Teil der Gummikugeln 20 nach oben aus dem U-profilförmigen Trägerring 11' vorsteht. An dem von der Rohrschelle umschlossenen Fallrohr 12' ist ein Stützflansch 24 vorgesehen, der auf den Gummikugeln 20 aufliegt, so daß das Fallrohr 12' über den Stützflansch 24 von dem in nicht dargestellter Weise an einem Gebäudeteil befestigten Trägerring 11' abgestützt wird.

Anstelle der Gummikugeln 20 können als federelastische Elemente auch andere Körper aus Gummi oder einem federelastischen Kunststoff vorgesehen sein, die zum Beispiel als Würfel, Sterne, Winkel oder dergleichen ausgebildet sind.

Ferner ist es möglich, als Schalldämmittel einzelne Elemente mit unterschiedlichen federelastischen Eigenschaften aus unterschiedlichen Materialien und/oder unterschiedlicher Größe und Form zu verwenden.

Durch eine geeignete Wahl der federelastischen Eigenschaften der Gummikugeln 20 bzw. anderer federelastischer Körper können die Halte- und Schalldämmungseigenschaften je nach den gegebenen Erfordernissen geeignet ausgebildet werden.

## Patentansprüche

1. Anordnung mit Rohrschelle und Installationsrohr bzw. Fallrohr mit einem ein- oder mehrteiligen, das jeweilige Rohr umschließenden Trägerring und mit einem am Trägerring vorgesehenen Schalldämmittel,
wobei an der Außenseite des Rohres (12') ein sich radial erstreckender, ringförmiger Stützflansch (24) vorgesehen ist, dessen untere Stirnfläche an dem das Rohr (12') mit Abstand umschließenden Trägerring (11) über ein am Trägerring (11) gehaltertes, aus einer Mehrzahl von über den Trägerring (11) verteilten Elementen aus Gummi oder einem federelastischen Kunststoff bestehenden Schalldämmittel unter Aufrechterhaltung einer radialen Verschiebbarkeit vertikal abgestützt ist.

## Claims

1. Arrangement comprising a tube clamp and an installation pipe or downpipe having a one or multi-part carrier ring, which surrounds the respective pipe, and acoustic insulation means provided at the carrier ring, wherein a radially extending, ring-shaped support flange (24) is provided at the outer side of the pipe (12') and has a lower end face which is vertically supported on the carrier ring (11), via an acoustic insulation means consisting of a plurality of elements of rubber or of spring elastic plastic distributed over the carrier ring (11), while maintaining the possibility of radial displacement, said carrier ring surrounding and being spaced from the pipe (12'), .

## Revendications

1. Dispositif avec collier pour tuyau et tube d'installation ou de descente équipé d'une bague support en une ou plusieurs parties, enveloppant le tuyau respectif, et d'un moyen insonorisant prévu sur la bague support, une bride support (24) s'étendant dans le sens radial et de forme annulaire étant prévue sur la face externe du tuyau (12'), bride dont la surface frontale inférieure est soutenue verticalement sur la bague support (11) enveloppant le tuyau (12') à distance par l'intermédiaire d'un moyen insonorisant maintenu sur la bague support (11) et comprenant un certain nombre d'éléments répartis sur la bague support (11) en caoutchouc ou à base d'un plastique élastique, tout en conservant une possibilité de déplacement dans le sens radial.
